# EUROPEAN PATENT APPLICATION

(11) **EP 4 822 551 A1**
(43) Date of publication of application: **14.10.2026**
(21) Application number: 26165435.4
(22) Date of filing: 17.03.2026
(51) Int. Cl.: G06F 16/33

(54) **RETRIEVAL METHOD, HOST AND PROCESS NEAR MEMORY APPARATUS**

(30) Priority: 10.04.2025 CN 202510450438
(71) Applicant: Samsung Electronics Co., Ltd., Suwon-si, Gyeonggi-do 16677 (KR)
(72) Inventor: SI, Zhou, 16677 Suwon-si (KR); HE, Xing, 16677 Suwon-si (KR)
(74) Representative: Marks & Clerk LLP

(57) **Abstract**

The disclosure provides a retrieval method, a host, and a process near memory apparatus. The method includes receiving a query vector, initializing a plurality of process near memory (PNM) apparatuses to perform, in a respective stored subset of data, a sub-retrieval corresponding to the query vector, receiving a plurality of sub-results returned by the plurality of PNM apparatuses based on the sub-retrieval, and outputting a retrieval result regarding the query vector based on the plurality of sub-results.

## Description

### 1. Field

The disclosure relates to a field of data retrieval, and more particularly, to a retrieval method, a host and a process near memory (PNM) apparatus. The present invention generally relates to a retrieval method by a host device, a retrieval method by a PNM apparatus, and to a host device.

### 2. Background

Recently, data retrieval technologies, such as dense retrieval, provide an important support in various search engines, data mining, databases, recommendation systems and the like of application aspects of machine learning and plays an important role. For example, the dense retrieval method includes searching for objects in a data set which are similar to the query object. For example, if a user browses a picture of a dog, other similar pictures may be found in the data set accordingly.

However, in the dense retrieval, a large amount of data transmission between a central processing unit (CPU) and a memory results in lower retrieval performance, and a large amount of computation in the dense retrieval results in high CPU load.

### SUMMARY

According to an aspect of the present invention, there is provided a retrieval method by a host device, the method including receiving a query vector, initializing a plurality of process near memory (PNM) apparatuses to perform a sub-retrieval corresponding to the query vector, receiving a plurality of sub-results, each of the plurality of sub-results provided by one of the plurality of PNM apparatuses based on the sub-retrieval performed in a subset of data stored in a respective PNM apparatus, and outputting a retrieval result corresponding to the query vector based on the plurality of sub-results.

According to another aspect of the present invention, there is provided a retrieval method by a process near memory (PNM) apparatus, the method including receiving a request to perform a sub-retrieval corresponding to a query vector, performing the sub-retrieval in a subset of data stored in the PNM apparatus, and sending, to a host device, a sub-result based on the sub-retrieval.

According to another aspect of the present invention, there is provided a host device including: a memory storing one or more instructions, and a processor configured to execute the one or more instructions to: receive a query vector, initialize a plurality of process near memory (PNM) apparatuses to perform a sub-retrieval corresponding to the query vector, receive a plurality of sub-results, each of the plurality of sub-results provided by one of the plurality of PNM apparatuses based on the sub-retrieval performed in a subset of data stored in a respective PNM apparatus, and output a retrieval result corresponding to the query vector based on the plurality of sub-results.

According to an aspect of the disclosure, there is provided a process near memory (PNM) apparatus including: a memory storing a subset of data, and a processor configured to: receive a request to perform a sub-retrieval corresponding to a query vector, perform the sub-retrieval in a subset of data stored in the PNM apparatus, and sending, to a host device, a sub-result based on the sub-retrieval.

According to another aspect of the disclosure, there is provided a system including: a main processor, a memory, a plurality of PNM apparatuses, and a storage device. Each of the plurality of PNM apparatuses may be configured to perform a retrieval method including receiving a request to perform a sub-retrieval corresponding to a query vector, performing the sub-retrieval in a subset of data stored in the PNM apparatus, and sending, to a host device, a sub-result based on the sub-retrieval.

According to another aspect of the disclosure, there is provided a storage system including: a host device, and a plurality of process near memory (PNM) apparatuses. The host device may be configured to: receive a query vector, initialize the plurality of PNM apparatuses to perform a sub-retrieval corresponding to the query vector, receive a plurality of sub-results, each of the plurality of sub-results provided by one of the plurality of PNM apparatuses based on the sub-retrieval, and output a retrieval result corresponding to the query vector based on the plurality of sub-results. Each of the plurality of PNM apparatuses may be configured to: perform the sub-retrieval in a subset of data stored in the respective PNM apparatus, and send, to the host device, the sub-result based on the sub-retrieval.

According to another aspect of the disclosure, there is provided a data center system including a plurality of application servers, and a plurality of storage servers. Each of the plurality of application servers may include a plurality of process near memory (PNM) apparatuses, and each of the plurality of PNM apparatuses may be configured to perform a retrieval method including receiving a request to perform a sub-retrieval corresponding to a query vector, performing the sub-retrieval in a subset of data stored in the PNM apparatus, and sending, to a host device, a sub-result based on the sub-retrieval.

According to another aspect of the disclosure, there is provided a computer readable storage medium having a computer program stored thereon, the computer program when executed by a processor is configured to perform a retrieval method including receiving a query vector, initializing a plurality of process near memory (PNM) apparatuses to perform a sub-retrieval corresponding to the query vector, receiving a plurality of sub-results, each of the plurality of sub-results provided by one of the plurality of PNM apparatuses based on the sub-retrieval performed in a subset of data stored in a respective PNM apparatus, and outputting a retrieval result corresponding to the query vector based on the plurality of sub-results.

It should be understood that the above general description of aspects of the disclosure, including aspects of the invention, and the later detailed description, are examples and explanatory only and do not limit theinvention, which is defined by the claims.

### BRIEF DESCRIPTION OF DRAWINGS

The accompanying drawings herein are incorporated into and form part of the specification, illustrate embodiments consistent with the disclosure, which are used in conjunction with the specification to explain the principles of the present invention and do not constitute a limitation of the present invention which is defined by the claims.
FIGS. 1A and 1B are diagrams illustrating a comparison between a KNN algorithm and an ANNS algorithm.
FIG. 2 illustrates a schematic diagram of a CXL-ANNS hardware structure.
FIG. 3 illustrates a schematic diagram of a CXL-ANNS software structure.
FIG. 4 illustrates a schematic diagram of computation in a CPU of a CXL-ANNS.
FIG. 5 illustrates a schematic diagram of a structure according to embodiments of the disclosure.
FIG. 6 illustrates a flowchart of a retrieval method applied to a host according to embodiments of the disclosure.
FIG. 7 illustrates a schematic diagram of a retrieval agent module in a host communicating with a PNM apparatus according to embodiments of the disclosure.
FIG. 8 illustrates a flowchart of a retrieval agent algorithm according to embodiments of the disclosure.
FIGS. 9A and 9B are diagrams illustrating partitioning of dense retrieval according to embodiments of the disclosure.
FIG. 10 illustrates a flowchart of a retrieval method applied to a PNM apparatus according to embodiments of the disclosure.
FIG. 11 illustrates a flowchart of an ANNS-based retrieval according to embodiments of the disclosure.
FIG. 12 illustrates a flowchart of overall data transmission of a retrieval method according to embodiments of the disclosure.
FIG. 13 illustrates a schematic diagram of a host according to embodiments of the disclosure.
FIG. 14 illustrates a schematic diagram of a PNM apparatus according to embodiments of the disclosure.
FIG. 15 is a diagram of a system to which a storage device is applied, according to an embodiment.
FIG. 16 is a block diagram of a host storage system according to an example embodiment.
FIG. 17 is a diagram of a data center to which a memory device is applied, according to an embodiment.

### DETAILED DESCRIPTION

The disclosure provides a retrieval method, a host and a process near memory apparatus which may address a part of or all the problems described above.

To promote an understanding of the principles of the disclosure, reference will now be made to the various embodiments and specific language will be used to describe the same. The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. Also, the various embodiments described herein are not necessarily mutually exclusive, as some embodiments can be combined with one or more other embodiments to form new embodiments. The term "or" as used herein, refers to a non-exclusive or, unless otherwise indicated. The examples used herein are intended merely to facilitate an understanding of ways in which the embodiments herein can be practiced and to further enable those skilled in the art to practice the embodiments herein. Accordingly, the examples should not be construed as limiting the scope of the invention as defined by the claims.

It should be noted that the terms "first", "second", etc. in the specification and claims of the disclosure and the accompanying drawings above are used to distinguish similar objects rather than to describe a particular order or sequence. It should be understood that data so distinguished may be interchanged, where appropriate, so that embodiments of the disclosure described herein may be implemented in an order other than those illustrated or described herein. Embodiments described in the following examples do not represent all embodiments that are consistent with the disclosure. Rather, they are only examples of devices and methods that are consistent with some aspects of the disclosure, such as those defined by the appended claims.

It should be noted herein that "at least one of the several items" in this disclosure includes "any one of the several items", "any combination of the several items" and "all of the several items" the juxtaposition of these three categories. For example, "including at least one of A and B" includes the following three juxtapositions: (1) including A; (2) including B; (3) including A and B. Another example is "performing at least one of operation one and operation two", which means the following three juxtapositions (1) performing operation one; (2) performing operation two; (3) performing operation one and operation two.

Reference throughout this specification to "an aspect", "another aspect" or similar language means that a particular feature, structure, or characteristic described in connection with the embodiment is included in at least one embodiment of the disclosure. Thus, appearances of the phrase "in an embodiment", "in another embodiment" and similar language throughout this specification may, but do not necessarily, all refer to the same embodiment.

The terms "comprises", "comprising", "has," "have," or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises...a" does not, without more constraints, preclude the existence of other devices or other sub-systems or other elements or other structures or other components or additional devices or additional sub-systems or additional elements or additional structures or additional components.

As is traditional in the field, embodiments may be described and illustrated in terms of blocks which carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the invention which is defined by the claims. Likewise, the blocks of the embodiments may be physically combined into more complex blocks without departing from the scope of the invention which is defined by the claims. However, the disclosure is not limited thereto, and as such, the blocks, which may be referred to herein as managers, units, modules, or the like, may be software modules implemented by software codes, program codes, software instructions, or the like. The software modules may be executed on a processor.

In retrieval technology, various types of algorithms may be implemented to perform dense retrieval. For example, a K-nearest neighbor (KNN) algorithm or an approximate Nearest Neighbor Search (ANNS) algorithm may be implemented to perform dense retrieval. However, the disclosure is not limited to these algorithms. The dense retrieval represents an object using a feature vector containing hundreds of dimensions. Moreover, the dense retrieval represents a degree of similarity between a plurality of objects using a distance between the feature vectors.

The KNN algorithm may obtain the K most similar results by comparing the distances between the data vectors (the feature vectors of the objects in the data set, hereafter also referred to as vectors) and a query vector (the feature vector of a query object). Due to the large number of dimensions corresponding to the feature vector and a large amount of data for retrieval, the KNN requires a large amount of data computation. For example, in a related art e-commerce platform, the dense retrieval recommends 100 neighbors from 2 billion vectors (128 dimensions) for a single query.

The ANNS algorithm may use a graph to represent relationships between each object (among the plurality of objects) and its nearest neighbors. The ANNS algorithm restricts searching a vector to only searching a subset of neighbors which are the nearest neighbors, which reduces the amount of computation.

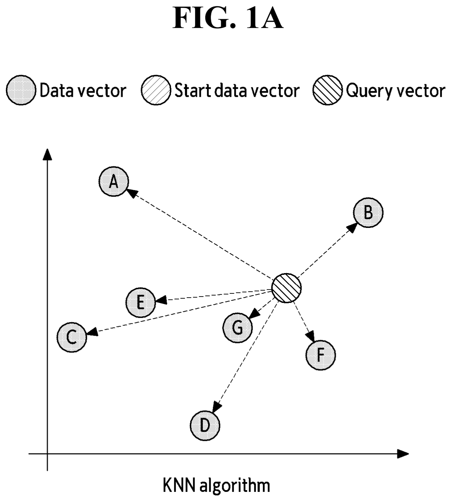

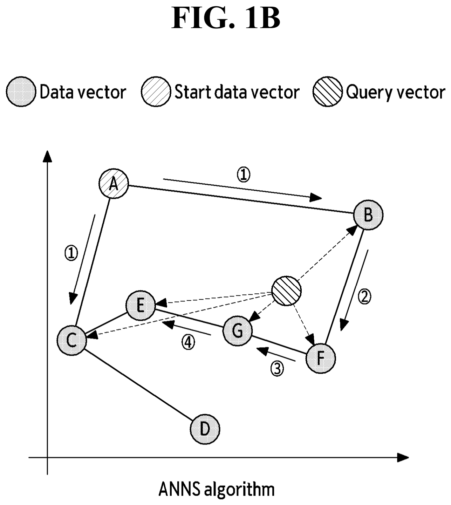

FIGS. 1A and 1B are diagrams illustrating a comparison between a KNN algorithm and an ANNS algorithm. For example, FIG. 1A shows an illustration of the KNN algorithm and FIG. 1B shows an illustration of the ANNS algorithm. As shown in the FIG. 1A, the KNN algorithm needs a total of seven distances to be computed from the query vector to the data vectors (vector A to vector G). On the other hand, as shown in FIG. 1B, according to the ANNS algorithm, if vector A is used as the start data vector and the neighbor vectors B and C, the vector F, the vector G, and the vector E are obtained sequentially, it only needs 5 distances to be computed from the query vector to the data vectors in the end. For example, ① vector B and vector C are neighbors of vector A and vector B is closer to query vector, ② vector F is neighbor of vector B and closer to query vector, ③ vector G is neighbor of vector B and closer to query vector, and ④ vector E is neighbor of vector G but it is farther than vector G to query vector. Although the ANNS algorithm using the graph reduces the amount of computation, it requires more memory to cache the graph and the data vectors.

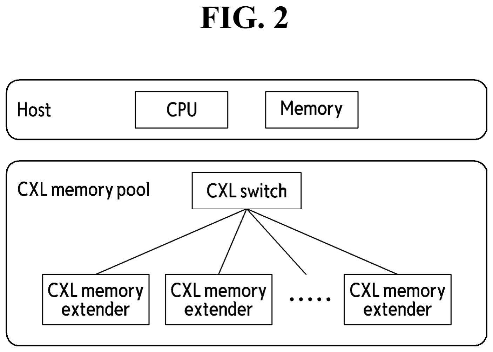

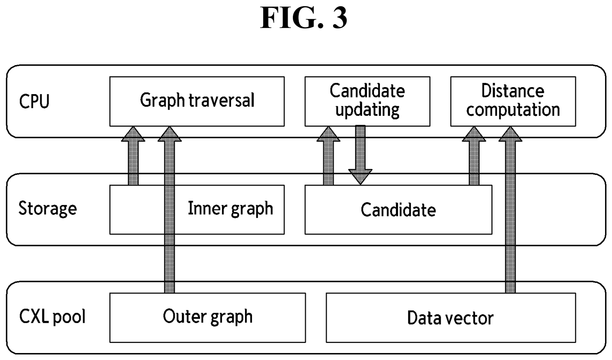

A compute express link (CXL)-approximate nearest neighbor search (CXL-ANNS) extends memory capacity by using the CXL memory pool. FIG. 2 illustrates a schematic diagram of a CXL-ANNS hardware structure. The hardware structure includes two parts, for example, a host and a CXL memory pool. The host includes a CPU and a memory, and the memory pool includes CXL memory extenders connected by a CXL switch based on a CXL protocol. FIG. 3 illustrates a schematic diagram of a CXL-ANNS software structure. Referring to FIG. 3, the operations implemented in the CPU include graph traversal, candidate updating, and distance computation. For example, the graph traversal may be used to implement the traversal of the graphs in the memory and the CXL pool to obtain neighbor data vectors of the current vector. For example, the candidate updating may be performed by comparing the distances between the data vectors in a candidate (e.g., a candidate list) and the query vector, sorting the data vectors according to ascending order of the distances, and retaining only K results. For example, the distance computation may include computing the distance between two vectors. An inner graph and a candidate are stored in the memory, the candidate is used to save the neighbor data vectors obtained from the graph traversal and the distances of the data vectors from the query vector. An outer graph and data vectors are stored in the CXL pool. To improve performance, the CXL-ANNS partitions the graph into the inner graph and the outer graph, and the inner graph with high access frequency is cached in the memory. For example, the memory may include, but is not limited to, a dynamic random access memory (DRAM).

However, a large amount of data transmission in the CXL-ANNS results in low performance. In the CXL-ANNS, the graph traversal, the distance computation, and the candidate updating require a large amount of data transmission between the CPU and the memory. Although the CXL-ANNS stores the frequently used inner graph in a host memory, the CXL-ANNS still needs to acquire the outer graph and the data vectors from the CXL pool, and latency of the CXL memory extender is higher than that of the host memory, and the data transmission at high latency may degrade the retrieval performance.

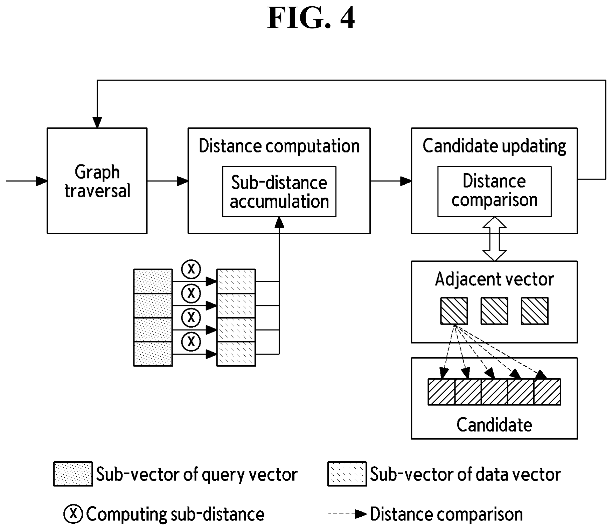

In addition, a large amount of computation in the CXL-ANNS leads to high CPU load. For example, since the feature vector contains hundreds of dimensions, the computation of the distance between vectors leads to the high CPU load. FIG. 4 illustrates a schematic diagram of computation in a CPU of a CXL-ANNS. Referring to FIG. 4, although the CXL-ANNS splits the data vector and the query vector into a plurality of sub-vectors and computes the sub-distances in the CXL memory extenders, the accumulation of the sub-distances still needs computation by the CPU. Also, during the candidate updating, the distance of a new neighbor data vector (e.g., an adjacent vector) found by the graph traversal from the query vector needs to be compared with the distances of the data vectors in the candidate from the query vector, and sorted, which also leads to the high CPU load.

Compared to the CXL-ANNS, one or more embodiments of the disclosure provides a retrieval method that utilizes a process near memory (PNM) technology. In the PNM technology, the memory and a logic chip are integrated into an advanced integrated circuit package to reduce data movement between the CPU and the memory. For example, the PNM technology may utilize the memory integrated into the advanced integrated circuit package for data computation. In the process near memory retrieval method, the computational function may be performed closer to the memory, which reduces occurrences of bottlenecks in the data transmission between the CPU and memory. The CXL interface-based PNM technology has been proven to be an excellent solution for high-volume artificial intelligence (AI) model processing. For example, in tests performed using the CXL interface-based PNM method, the results show more than double the performance improvement over other methods in applications, such as recommendation systems or memory databases, that require high memory bandwidth.

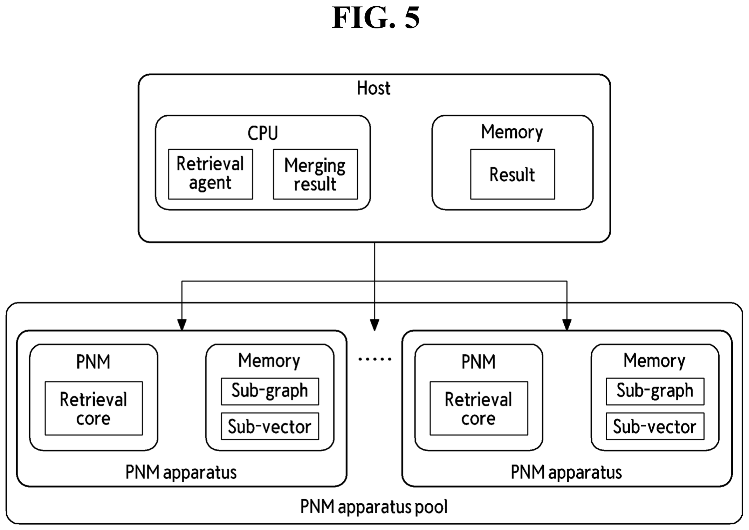

According to an embodiment of the disclosure, the memory capacity may be extended through one or more PNM apparatuses. For example, the dense retrieval may be partitioned (or divided) into a plurality of sub-retrievals to be offloaded to the one or more PNM apparatuses. This reduces the CPU load and data transmission between the CPU and the memory. The retrieval method, the host, and the PNM apparatus according to embodiments of the disclosure are specifically described below with reference to FIGS. 5 through 17 of the accompanying drawings.

FIG. 5 illustrates a schematic diagram of a structure according to embodiments of the disclosure. Referring to FIG. 5, the structure may include a host and a PNM apparatus pool. The host may include a CPU and a memory, and the PNM apparatus pool may include a plurality of PNM apparatuses. The host may also be referred to as a host device. In the ANNS, all data vectors are stored in one graph, and the graph of high density results in slow graph traversal. According to an embodiment of the disclosure, the graph may be split into a plurality of sub-graphs. For example, the plurality of sub-graphs may be stored (or saved) in the PNM apparatuses, and each of the PNM apparatuses may traverse the sub-graph stored in the respective PNM apparatus. According to an embodiment, each of the PNM apparatuses may traverse the sub-graph respectively stored therein in parallel. For example, a first PNM apparatus may traverse a first sub-graph stored in the first PNM apparatus and a second PNM apparatus may traverse a second sub-graph stored in the second PNM apparatus. The first PNM apparatus and the second PNM apparatus may traverse the respective sub-graphs in a parallel. In this manner, the density of the graph and a number of graph to be traversed by each of the PNM apparatuses may be reduced. Moreover, the parallel retrieval by the plurality of the PNM apparatuses improves the retrieval performance. According to an embodiment, the graph may be split to have a number of sub-graphs equal to a number of the PNM apparatuses. However, the disclosure is not limited thereto, and as such, the number of sub-graphs may be different than the number of the PNM apparatuses. For example, the number of sub-graphs may be smaller than the number of the PNM apparatuses.

According to an embodiment, on the host side, operations of two modules can be realized in the CPU. For example, the CPU may be configured to implement a retrieval agent module and a merging result module. However, the disclosure is not limited thereto, and as such, the CPU may be configured to implement other modules and/or perform other operations. For example, the retrieval agent module and the merging result module may be software modules executed by the CPU. For example, the software modules may be stored in a storage or the memory. According to an embodiment, the retrieval agent module may be responsible for communicating with the one or more PNM apparatuses through an interface and providing necessary parameters for the retrieval in the PNM apparatus. The interface may be referred to as pnm_retrieval. According to an embodiment, the merging result module may be sort or modify the sub-results retrieved by the one or more PNM apparatuses. For example, the merging result module may sort or modify the sub-results according to the system requirements to obtain the final results. According to an embodiment, the memory may store the retrieval sub-results obtained from the one or more PNM apparatuses.

According to an embodiment, on the PNM apparatus pool side, each of the one or more PNM apparatuses may include includes a PNM computing unit and a memory. According to an embodiment, the PNM computing unit may be a PNM processor. However, the disclosure is not limited thereto, and as such, the PNM computing unit may be implemented as a logic circuit. For example, operations of a retrieval core module may be realized in the PNM processor. For example, the retrieval core module may be a software module executed by the PNM processor, and the retrieval core module performs the sub-retrieval in the PNM apparatus according to the parameters of the interface (e.g., pnm_retrieval). The sub-vector is a subset of the data vectors assigned to the PNM apparatus, and the sub-graph (e.g., sub-graph data) is the graph assigned to the PNM apparatus. For example, the sub-graph data may represent relative relationships (e.g., connectivity) of the subset of the data vectors in the graph. According to an embodiment, the memory of the PNM apparatus may store the sub-graph and the sub-vector.

It should be understood that the above structure is only for example and the disclosure is not limited thereto.

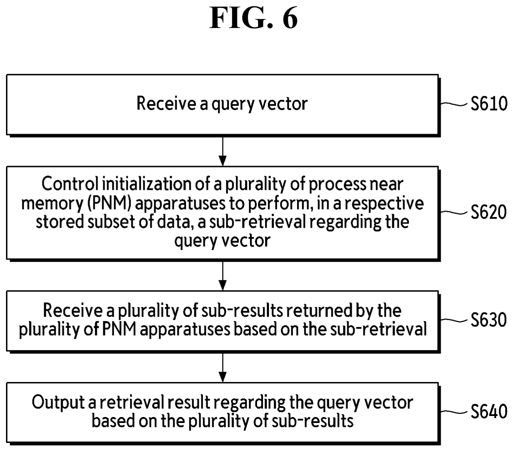

FIG. 6 illustrates a flowchart of a retrieval method applied to a host according to embodiments of the disclosure.

In operation S610, the method may include receiving a query vector. For example, the host may receive a query vector. According to an embodiment, the host may receive the query vector input by a user and begin a retrieval process corresponding to the query vector.

In operation S620, the method may include initializing a plurality of process near memory (PNM) apparatuses to perform a sub-retrieval corresponding to the query vector. For example, the host may perform a control operation to initialize the plurality of PNM apparatuses to perform a sub-retrieval corresponding to the query vector. For example, the sub-retrieval may be performed in a subset of data respectively stored in each of the plurality of PNM apparatuses. For example, a first sub-retrieval may be performed in a first subset of data stored in a first PNM apparatus, among the plurality of PNM apparatuses and a second sub-retrieval may be performed in a second subset of data stored in a second PNM apparatus, among the plurality of PNM apparatuses.

According to embodiments of the disclosure, the controlling of the initialization of the plurality of PNM apparatuses to perform the sub-retrieval regarding the query vector may include providing retrieval parameters to the plurality of PNM apparatuses to initiate the plurality of PNM apparatuses to perform the sub-retrieval in parallel in the respectively stored subset of data. For example, the retrieval parameters include, but is not limited to, parameters related to the query vector and a return address of a sub-result.

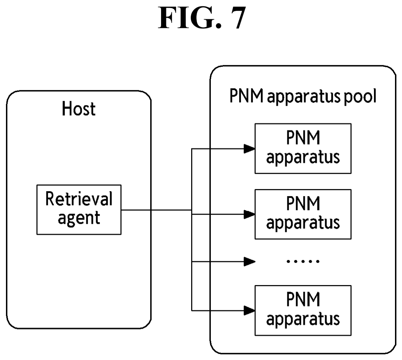

FIG. 7 illustrates a schematic diagram of a retrieval agent module in a host communicating with a PNM apparatus according to embodiments of the disclosure. Referring to FIG. 7, the retrieval agent module running on the host side may be responsible for communicating with the PNM apparatuses and providing parameters (e.g., the retrieval parameters) for performing the retrieval (e.g., sub-retrieval) in the PNM apparatuses. The retrieval agent module may initiate the sub-retrieval for each PNM apparatus through, for example, the interface "pnm_retrieval". According to an embodiment, when the sub-retrieval in the PNM apparatus is completed, the sub-result is stored at the address indicated by the parameter "result". The interface "pnm_retrieval" is defined as follows: int pnm_retrieval(*query_vector, query_size, **result, index, count). Table 1 shows the meaning of each parameter as follows.

**Table 1**

| Parameter type | Parameter name | Description |
|---|---|---|
| uint64_t* | query_vector | Address of query vector |
| uint64_t | query_size | Size of query vector |
| uint64_t* | result | Storage address of sub-result |
| uint32_t | index | PNM apparatus index |
| uint16_t | count | Candidate capacity |

The parameters may include, but is not limited to, parameters related to the query vector as well as the storage address of the sub-result. For example, the parameters related to the query vector may include, but is not limited to, a query vector address and a query vector size. For example, the storage address of the sub-result may be a return address of the sub-result. According to an embodiment, the storage address of the sub-result may be an address in a host memory. After the sub-retrieval is completed, the PNM apparatus may return the sub-result to the host memory in accordance with the storage address of the sub-result.

According to embodiments of the disclosure, the plurality of PNM apparatuses may be all of the PNM apparatuses in a PNM apparatus pool. However, the disclosure is not limited thereto, and as such, the plurality of PNM apparatuses may be some of the PNM apparatuses in a PNM apparatus pool. For example, the PNM apparatus pool may include a plurality of PNM apparatuses, and the host may control the initialization of all or some of the PNM apparatuses in the PNM apparatus pool.

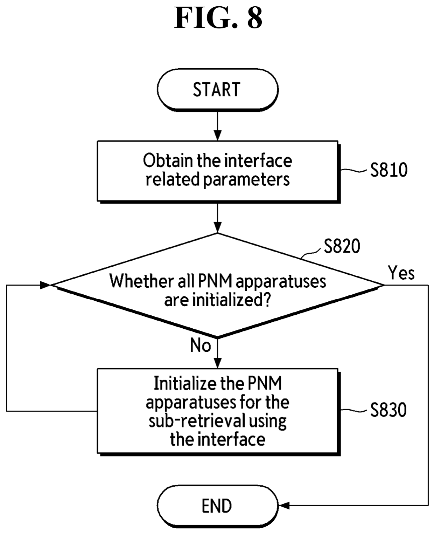

FIG. 8 illustrates a flowchart of a retrieval agent algorithm according to embodiments of the disclosure. In FIG. 8, the retrieval agent module initiates all PNM apparatuses in the apparatus PNM pool by default to perform the sub-retrieval. In operation S810, the method may include obtaining interface related parameters. For example, the retrieval agent module may obtain the interface related parameters. For example, the interface related parameters may include, but is not limited to, the query vector address, the query vector size, the storage address of the sub-result, the PNM apparatus index, and the candidate capacity. In operation S820, the method may include determining whether all PNM apparatuses are initialized. For example, the retrieval agent module may determine whether all PNM apparatuses are initialized. In an example case in which the result of the determinations is "yes" the process ends, and in an example case in which the result of the determinations is "no" the process proceeds to operation S830. In operation S830, the method includes initializing the PNM apparatuses for the sub-retrieval until all the PNM apparatuses are initialized. For example, the retrieval agent module may initialize the PNM apparatuses for the sub-retrieval using the interface until all the PNM apparatuses are initialized.

According to an embodiment, the retrieval agent module may initialize only some of the PNM apparatuses in the apparatus PNM pool. For example, the PNM apparatus pool may include four PNM apparatuses, namely, a PNM apparatus A, a PNM apparatus B, a PNM apparatus C, and a PNM apparatus D. According to an embodiment, the host may want to control the initialization of any two of the PNM apparatuses, for example, the PNM apparatus A and the PNM apparatus C, and these two PNM apparatuses return two sub-results. For example, the retrieval agent module in the host may initialize the PNM apparatus A and the PNM apparatus C via interface "pnm_retrieval", and the PNM apparatus index "index" in the interface "pnm_retrieval" initializing the PNM apparatus A may be value 1, and the PNM apparatus index "index" in the interface "pnm_retrieval" initializing the PNM apparatus C may be value 2. Since two sub-results will be returned by initializing two PNM apparatuses, the "result" includes the positions of the two sub-results, the PNM apparatus A may return the sub-result to the first sub-result position at the "result" according to the "index" of value 1, and the PNM apparatus C may return the sub-result to the second sub-result position at the "result" according to the "index" of value 2.

Returning to refer to FIG. 6, in operation S630, the method may include receiving a plurality of sub-results. For example, the host may receive a plurality of sub-results returned by the plurality of PNM apparatuses based on the sub-retrieval performing by the respective PNM apparatus.

In operation S640, the method may include outputting a retrieval result. For example, the host may output a retrieval result corresponding to the query vector based on the plurality of sub-results.

According to embodiments of the disclosure, the outputting of the retrieval result regarding the query vector based on the plurality of sub-results may include merging the plurality of sub-results to output the retrieval result.

According to embodiments of the disclosure, the plurality of PNM apparatuses may return to the host the respective sub-result based on the sub-retrieval, and the number of sub-results is the same as the number of initialized PNM apparatuses. The host receives the plurality of sub-results stored in the host memory and may merge the plurality of sub-results to output the retrieval result through the merging result module. Here, the merging may be sorting or modifying of the plurality of sub-results. For example, the plurality of sub-results (e.g., data vectors in the sub-results) may be sorted according to a degree of similarity (e.g., a distance). For example, only the retrieval results that are most similar to the query vector are output. For example, only a predetermined number of retrieval results that are most similar to the query vector are output. According to an embodiment, retrieval results having a degree of similarity less than or equal to a reference value with respect to the query vector may be selected for output. For example, retrieval results having a distance less than or equal to a reference value with respect to the query vector may be selected as output. According to an embodiment, the method may include eliminating sub-results (e.g., data vectors in the sub-results) that do not satisfy a particular condition are eliminated, performing the sorting (e.g., based on degree of similarity) on the remaining sub-results, and outputting a reference number of results. Here, the reference number of results may be a predetermined number of results. The predetermined number of results herein may be, for example, the number of user input or a number of final results required by the system, however, the disclosure is not limited thereto.

According to the retrieval method according to embodiments of the disclosure, the retrieval (e.g., the dense retrieval) is partitioned into a plurality of sub-retrievals to be offloaded to the plurality of PNM apparatuses, thereby reducing the load of the CPU and the data transmission between the CPU and the memory. Also, the plurality of PNM apparatuses may retrieve in parallel, thereby improving the performance of the retrieval.

According to embodiments of the disclosure, the sub-retrieval may be performed based on the approximate nearest neighbor search (ANNS), and the stored subset of data may be a sub-graph including a subset of data vectors. For example, the sub-graph may be obtained by splitting a graph including all data vectors which is used for the ANNS.

It should be understood that the retrieval is illustrated taking the ANNS-based retrieval as an example, however, the disclosure is not limited thereto and the retrieval may be any dense retrieval that can be split or partitioned.

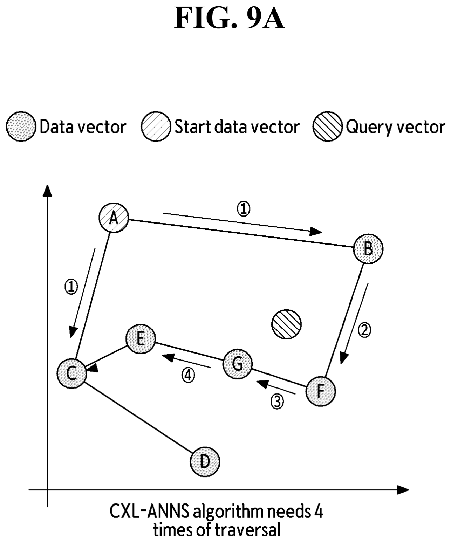

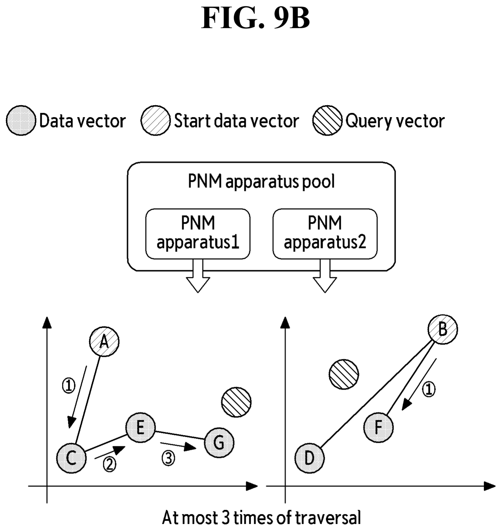

FIGS. 9A and 9B are diagrams illustrating partitioning of dense retrieval according to embodiments of the disclosure. For example, FIG. 9A shows a diagram corresponding to the CXL-ANNS and FIG. 9B shows a diagram corresponding to the retrieval method according to embodiments of the disclosure. FIG. 9A shows a graph including all data vectors (including vectors A to vector G) used for the ANNS, and FIG. 9B shows a graph split into sub-graph 1 and sub-graph 2 including a subset 1 of data vectors (including vector A, vector C, vector E, and vector G) and a subset 2 of data vectors (including vector B, vector D, and vector F), respectively. The sub-graph is stored in the memory of PNM apparatus in the form of the sub-graph data and sub-vector data. For example, the sub-graph 1 may be stored in a first PNM apparatus 1 and the sub-graph 2 may be stored in a second PNM apparatus 2. According to an embodiment, the sub-vector data may represent the subset of data vectors, and the sub-graph data may represent relative positions (e.g., connection relationships) of the subset of data vectors in the sub-vector data.

In the CXL-ANNS, the graph traversal is performed four times. The performing the graph traversal four times may include include traversing of vectors B and C with vector A as the current vector (e.g., ①), traversing of vector F with vector B as the current vector (e.g., ②), traversing of vector G with vector F as the current vector (e.g., ③), and traversing of vector E with vector G as the current vector (i.e. ④). In the retrieval method according to embodiments of the disclosure, the graph is split into two sub-graphs (sub-graph 1 and sub-graph 2) to be offloaded to the PNM apparatuses (e.g., PNM apparatus 1 and PNM apparatus 2) for sub-retrieval. In this case, the graph traversal may be performed three times in the PNM apparatus 1 and of the graph traversal may be performed one time in PNM apparatus 2. The retrieval method according to embodiments of the disclosure performs up to three times of graph traversal due to the PNM apparatus 1 and the PNM apparatus 2 performing the sub-retrieval in parallel. For example, the performing the graph traversal three times in PNM apparatus 1 may include traversing of vector C with vector A as the current vector (e.g., ①), traversing of vector E with vector C as the current vector (e.g., ②), and traversing of vector G with vector E as the current vector (e.g., ③) and performing the graph traversal one time in the PNM apparatus 2 may include traversing of vector D and vector F with vector B as the current vector (e.g., ①).

According to embodiments of the disclosure, the retrieval parameters may further include a candidate capacity of the ANNS. For example, the candidate capacity may indicate the number of candidate data vectors in a candidate and the candidate capacity is less than a predetermined number of results. For example, the outputting of the retrieval result regarding the query vector based on the plurality of sub-results may include, but is not limed to, sorting the plurality of sub-results based on distances between the plurality of sub-results and the query vector, and outputting the sorted sub-results the number of which is the predetermined number of results, as the retrieval result.

According to embodiments of the disclosure, as shown in Table 1, a parameter passed by the interface "pnm_retrieval" may also include the candidate capacity "count" (e.g., a value of N, where N is a positive integer), where the candidate capacity indicates a number of candidate data vectors in the candidate (e.g., a candidate list), and the PNM apparatus returns the candidate data vectors in the candidate as the sub-result after the sub-retrieval is completed. For example, the sub-result returned by the PNM apparatus includes the candidate capacity number (e.g., N) of the data vectors (e.g., candidate data vectors). For example, in the case that M (M is a positive integer) PNM apparatuses are initialized for sub-retrieval, M sub-results are returned, each sub-result includes N data vectors. According to embodiments of the disclosure, after receiving the plurality of sub-results, the host also sorts the plurality of sub-results based on distances between the plurality of sub-results and the query vector, and outputs the sorted sub-results the number of which is the predetermined number of results (e.g., P, where P is a positive integer) as the retrieval result. For example, in the case that M PNM apparatuses are initialized for sub-retrieval, the host receives M*N data vectors stored in the host memory returned by the PNM apparatuses. The host (e.g., the merging result module) may compute the distances between the M*N data vectors and the query vector respectively, and then output the first P of sorted data vectors as the retrieval result based on the sorted results (e.g., in ascending order) of M*N distances. According to an embodiment, the sub-results returned by the PNM to the host include the data vectors and the distances of the data vectors to the query vectors. For example, the host receives the M*N data vectors and the distances of the *N data vectors to the query vector stored in the host memory returned by the PNM apparatuses, and then outputs the first P of sorted data vectors as the retrieval result based on the sorted results (e.g., in ascending order) of the M*N distances.

According to embodiments of the disclosure, the candidate capacity may be less than the predetermined number of results, that is, N<P. The candidate capacity being less than the predetermined number of results (e.g., the reduction of the candidate capacity) reduces the amount of computation of the retrieval (e.g., the sub-retrieval). According to an embodiment, to satisfy a final output of P retrieval results, N may satisfy that the product of N and M is greater than or equal to P.

In the retrieval method according to embodiments of the disclosure as described above, firstly, the sub-graph including the subset of data vectors is stored in the memory of the PNM apparatus and the sub-retrieval is accomplished in the PNM apparatus, which reduces data transmission between the CPU and the memory during the retrieval period; secondly, the sub-retrieval is offloaded to the PNM apparatus, and the host initiates the sub-retrieval in the PNM apparatus only through the interface and performs the merging of a small number of sub-results, which reduces the load of the CPU; furthermore, the retrieval is partitioned into a plurality of sub-retrievals performed in parallel in the PNM apparatuses, the reduction of graph density and the candidate capacity reduces the computation of the retrieval and improves the performance of the retrieval.

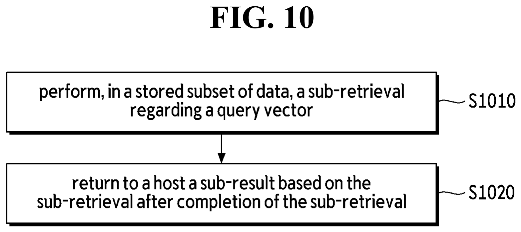

FIG. 10 illustrates a flowchart of a retrieval method applied to a PNM apparatus according to embodiments of the disclosure.

In operation S1010, the method may include performing a sub-retrieval corresponding to a query vector. For example, the PNM apparatus may perform a sub-retrieval corresponding to the query vector based on the stored subset of data.

According to embodiments of the disclosure, the performing, in the stored subset of data, the sub-retrieval regarding the query vector may include: performing the sub-retrieval in the stored subset of data according to retrieval parameters provided by the host for initiating the sub-retrieval. For example, the retrieval parameters include, but is not limited to, parameters related to the query vector and a return address of the sub-result.

According to embodiments of the disclosure, the retrieval agent module on the host side may initiate the sub-retrieval for each PNM apparatus through the interface (e.g., pnm_retrieval). For example, the PNM apparatus may receive a request to perform a sub-retrieval on the subset of data stored in the PNM apparatus. The retrieval core module in the PNM apparatus performs the sub-retrieval in the subset of data stored in memory according to the parameters (e.g., retrieval parameters) provided by the host through the interface. As shown in Table 1, the retrieval parameters may include parameters related to the query vector (e.g., including the query vector address and the query vector size) and the storage address of the sub-result (e.g., the return address of the sub-result).

According to embodiments of the disclosure, the sub-retrieval may be performed based on an approximate nearest neighbor search(ANNS) and the stored subset of data is a sub-graph including a subset of data vectors. For example, the sub-graph is obtained by splitting a graph including all data vectors which is used for the ANNS.

It should be understood that the retrieval is illustrated taking the ANNS-based retrieval as an example, however, the disclosure is not limited thereto and the retrieval may be any dense retrieval that can be split.

According to embodiments of the disclosure, the graph including all data vectors for the ANNS may be pre-split into a plurality of sub-graphs to be stored respectively in the memory of the plurality of PNM apparatuses. For example, the sub-graph includes a subset of the data vectors.

According to embodiments of the disclosure, the retrieval parameters may further include a candidate capacity of the ANNS. For example, the candidate capacity may indicate the number of candidate data vectors in a candidate. For example, performing the sub-retrieval in the stored subset of data according to the retrieval parameters may include searching in the sub-graph for data vectors the number of which is the candidate capacity and that are closest in distance to the query vector, according to the parameter related to the query vector.

According to embodiments of the disclosure, as shown in Table 1, the search parameters may further include the candidate capacity "count" related to the ANNS. For example, the candidate capacity may indicate a number of candidate data vectors in the candidate. However, the disclosure is not limited thereto, and as such, the candidate capacity may limit the number of candidate data vectors in the candidate. The candidate capacity may be less than a reference number of final results, which reduces the comparisons in the candidate updating. Here, the reference number of final results may be a predetermined number of final results. According to an embodiment, a "count" value of1 may indicate that the candidate is canceled and only one neighbor data vector closest to the query vector is recorded.

The retrieval core module in the PNM apparatus may search for data vectors the number of which is the candidate capacity and that are closest in distance to the query vector in the sub-graph based on the ANNS, according to the parameters related to the query vector (e.g., the address of the query vector and the size of the query vector).

According to embodiments of the disclosure, the searching in the sub-graph for the data vectors the number of which is the candidate capacity and that are closest in distance to the query vector may include, but is not limited to, selecting, in the sub-graph, a start data vector as a current vector, and initializing the candidate to include the start data vector; traversing neighbor data vectors of the current vector in the sub-graph; computing distances between the neighbor data vectors and the query vector; updating the candidate based on a comparison of the distances; selecting, as the current vector, a candidate data vector in the updated candidate that is closest in distance to the query vector, and returning to the operation of traversing the neighbor data vectors of the current vector in the sub-graph in the case that the current vector is changed.

According to embodiments of the disclosure, the updating of the candidate based on the comparison of distances may include selecting, among the neighbor data vectors and existing candidate data vectors, the candidate capacity of the data vectors that are closest in distance to the query vector as new candidate data vectors; updating the candidate in case there is a new candidate data vector different from the existing candidate data vectors.

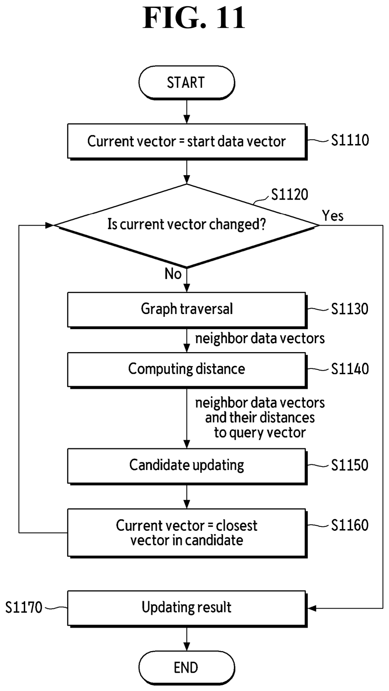

FIG. 11 illustrates a flowchart of an ANNS-based retrieval according to embodiments of the disclosure. For example, FIG. 11 illustrates a method of retrieval in a graph including all data vectors as an example, such as the ANNS-based retrieval being performed in the right of FIG. 1. However, the disclosure is not limited thereto, and as such, the retrieval method illustrated in FIG. 11 may be performing on a retrieval that is partitioned into a plurality of sub-retrievals to be offloaded to the PNM apparatuses, and the retrieval core in the PNM apparatus performs the sub-retrieval in the sub-graph including a subset of the data vectors based on the ANNS. For example, each of the PNM apparatuses may perform the operations illustrated in FIG. 11, and such a case, the "graph" in the following descriptions may correspond to a "sub-graph" and the "retrieval" may correspond to a "sub-retrieval".

In operation S1110, the method may include selecting a current vector. For example, a start data vector may be selected as the current vector. The start data vector may be a randomly selected data vector, an algorithmically selected data vector in the graph or a data vector at the center of the graph, but the disclosure is not limited thereto. For example, as shown in FIG. 1B, vector A is the start data vector and vector A is selected as the current vector. For example, in the case of the candidate capacity of 2, the candidate may be initialized to include vector A (the candidate is not full at this time), and a distance L_{A} between the candidate data vector (e.g., vector A) in the candidate and the query vector is recorded.

In operation S1120, the method may include determining whether the current vector is changed. In the case that the current vector is not changed compared to a previous time, the retrieval process ends, and the method proceeds to operation S1170. In operation S1170, the result is updated. For example, the result of the retrieval is output. In the scenario where the PNM apparatus performs the sub-retrieval, the PNM apparatus may return the sub-result to the host. In the case that the current vector is changed compared to that of the previous time, the method proceeds to operation S1130. According to another embodiment, the determination condition in operation S1120 may also be, for example, "the candidate has not been updated", and if this determination is "no" (e.g., the candidate has not been updated), the method proceeds to operation S1170, and otherwise, the method proceeds to operation S1130.

In operation S1130, the method may include performing the graph traversal. For example, neighbor data vectors of the current vector may be traversed in the graph. Referring to FIG. 1, the neighbor data vectors of vector A traversed in the graph are vector B and vector C.

In operation S1140, the method may include performing distance computation. For example, the distances between the neighbor data vectors and the query vector are computed. Referring to FIG. 1B, the distance L_{B} between vector B and the query vector and the distance L_{C} between vector C and the query vector are computed, respectively.

In operation S1150, the method may include performing candidate updating. For example, among the neighbor data vectors and the existing candidate data vectors, the candidate capacity (e.g., 2) of data vectors which are closest in distance to the query vector are selected as the new candidate data vectors, and the candidate is updated in the case that there exists a new candidate data vector that is different from the existing candidate data vectors. Among the computed distances L_{A}, L_{B}, and L_{C}, with reference to FIG. 1, the 2 data vectors which are closest in distance to the query vector are vector B and vector C (L_{B}<L_{C}<L_{A}), the candidate is updated to include vector B and vector C, and the distances L_{B} and L_{C} between the candidate data vectors (vector B and vector C) in the candidate and the query vector are recorded.

In operation S1160, the method may include selecting the candidate data vector in the updated candidate which is closest in distance to the query vector as the current vector. After the candidate vector is selected, the method returns to operation S1120. The candidate data vectors in the updated candidate include vector B and vector C, and vector B which is closest in distance to the query vector (L_{B}<L_{C}) is selected as the current vector, and it returns to operation S1120.

After returning to operation S1120, since the current vector is changed (from vector A to vector B), it proceeds to operation S1130. the flow continues to perform operations S1130 to S1160 until in operation S1120 it is determined that the current vector is not changed.

Referring to FIGS. 1B and 11, with the candidate capacity of 2, in the first round: in an example case in which the current vector is vector A, the neighbor data vectors traversed in the graph are vector B and vector C, the candidate is updated to include vector B and vector C, and the current vector is switched to vector B. In the second round: in an example case in which the current vector is vector B, the neighbor data vector traversed in the graph is vector F (vector A has already been traversed, and no longer considered), and the candidate is updated to include vector F and vector B (L_{F}<L_{B}<L_{C}), the current vector is switched to vector F. In the third round: in an example case in which the current vector is vector F, the neighbor data vector traversed in the graph is vector G (vector B has been traversed, and no longer considered), the candidate is updated to include vector G and vector F (L_{G}<L_{F}<L_{B}), and the current vector is switched to vector G. In the fourth round: in an example case in which the current vector is vector G, the neighbor data vector traversed in the graph is vector E (vector F has been traversed, and no longer considered), at this time, since L_{G}<L_{F}<L_{E}, the candidate is not updated and still includes vector G and vector F, and the current vector is still vector G. At this time, the condition of the end of the retrieval in operation S1120 is satisfied, and it proceeds to operation S1170, in which vector G and vector F in the candidate are returned to the host.

After the above four rounds, the retrieval ends. Vector G and vector F are the 2 data vectors in the graph that are closest in distance to the query vector. It should be understood that the above candidate capacity of 2 is only an example, and the disclosure is not limited thereto.

Returning to the reference to FIG. 10, in operation S1020, the method may include returning a sub-result based on the sub-retrieval. For example, the PNM apparatus may return a sub-result based on the sub-retrieval to a host after completion of the sub-retrieval.

According to embodiments of the disclosure, the returning to the host the sub-result based on the sub-retrieval may include: returning to the host the candidate data vectors in the candidate as the sub-result according to the return address of the sub-result.

According to embodiments of the disclosure, the return address of the sub-result may be an address in the host memory. After the sub-retrieval is completed, the PNM apparatus may return the sub-result to the host memory according to the return address of the sub-result. For example, the PNM apparatus may return the candidate data vectors (e.g., vector G and vector F) in the candidate to the host according to the return address (result) of the sub-result.

In the retrieval method according to embodiments of the disclosure as described above, firstly, the sub-graph including the subset of data vectors is stored in the memory of the PNM apparatus and the sub-retrieval is accomplished in the PNM apparatus, which reduces data transmission between the CPU and the memory during the retrieval period; secondly, the sub-retrieval is offloaded to the PNM apparatus, and the host initiates the sub-retrieval in the PNM apparatus only through the interface and performs the merging of a small number of sub-results, which reduces the load of the CPU; furthermore, the retrieval is partitioned into a plurality of sub-retrievals performed in parallel in the PNM apparatuses, the reduction of graph density and the candidate capacity reduces the computation of the retrieval and improves the performance of the retrieval.

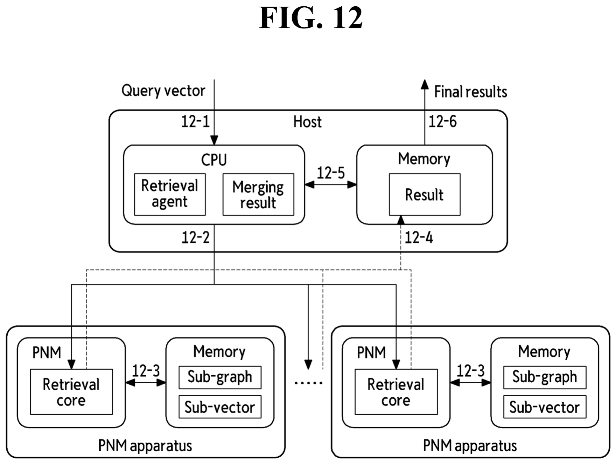

FIG. 12 illustrates a flowchart of overall data transmission of a retrieval method according to embodiments of the disclosure. Referring to FIG. 12, in operation 12-1, the method may include receiving the query vector. For example, the host may receive a query vector input by a user. In operation 12-2, the method may include initiating the sub-retrieval of the respective PNM apparatus. For example, the host initiates the sub-retrieval of the respective PNM apparatus using the interface (e.g., pnm_retrieval), and the retrieval agent module in the host may obtain the interface related parameters and initiate the sub-retrieval of the plurality of PNM apparatuses through the interface. In operation 12-3, the method may include performing the sub-retrieval within the respective PNM apparatus. For example, each of the plurality of PNM apparatuses may perform sub-retrieval. For example, the retrieval core module in the respective PNM apparatus may perform the sub-retrieval regarding the query vector in the subset of data (e.g., a sub-graph including a subset of the data vectors) stored in the memory of the PNM apparatus, according to the retrieval parameters passed by the interface. In operation 12-4, the method may include receiving the sub-results from the plurality of PNM apparatuses. For example, the host may receive the sub-results. For example, the host may receive a plurality of sub-results based on the sub-retrieval returned by the plurality of PNM apparatuses. For example, the sub-results are stored in the host memory (e.g., the "result" in FIG. 5). In operation 12-5, the method may include merging the sub-results. For example, the host may merge the sub-results, and the merging result module in the host may merge the results. In operation 12-6, the method may include outputting the final results. For example, the host may output the merged retrieval results.

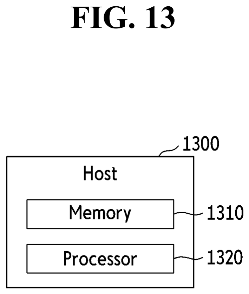

FIG. 13 illustrates a schematic diagram of a host computer according to embodiments of the disclosure.

Referring to FIG. 13, the host 1300 may include a memory 1310 and a processor 1320 (e.g., CPU). For example, the memory 1320 may store instructions; and the instructions, when executed by the processor 1320, may cause the processor 1320 to receive a query vector; control initialization of a plurality of process near memory (PNM) apparatuses to perform, in a respective stored subset of data, a sub-retrieval regarding the query vector; receive a plurality of sub-results returned by the plurality of PNM apparatuses based on the sub-retrieval; and output a retrieval result regarding the query vector based on the plurality of sub-results.

According to embodiments of the disclosure, the instructions, when executed by the processor 1320, may cause the processor to provide retrieval parameters to the plurality of PNM apparatuses to initiate the plurality of PNM apparatuses to perform the sub-retrieval in parallel in the respective stored subset of data. For example, the retrieval parameters include parameters related to the query vector and a return address of a sub-result.

According to embodiments of the disclosure, the plurality of PNM apparatuses may be all or some of PNM apparatuses in a PNM apparatus pool.

According to embodiments of the disclosure, the instructions, when executed by the processor 1320, may cause the processor to merge the plurality of sub-results to output the retrieval result.

According to embodiments of the disclosure, the sub-retrieval may be performed based on an approximate nearest neighbor search (ANNS). For example, the stored subset of data is a sub-graph including a subset of data vectors. For example, the sub-graph is obtained by splitting a graph including all data vectors which is used for the ANNS.

According to embodiments of the disclosure, the retrieval parameters may further include a candidate capacity of the ANNS. For example, the candidate capacity indicates the number of candidate data vectors in a candidate and the candidate capacity is less than a reference number of results. For example, the instructions, when executed by the processor, cause the processor to sort the plurality of sub-results based on distances between the plurality of sub-results and the query vector, and output the sorted sub-results the number of which is the reference number of results, as the retrieval result. For example, the reference number of results is a predetermined number of results.

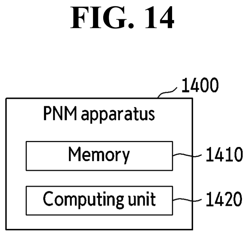

FIG. 14 illustrates a schematic diagram of a PNM apparatus according to embodiments of the disclosure.

Referring to FIG. 14, the PNM apparatus 1400 includes a memory 1410 and a computing unit 1420 (e.g., a PNM). For example, the memory 1410 stores a subset of data; the computing unit 1420 may perform, in a stored subset of data, a sub-retrieval regarding a query vector; and return to a host a sub-result based on the sub-retrieval after completion of the sub-retrieval.

According to embodiments of the disclosure, the computing unit 1420 may perform the sub-retrieval in the stored subset of data according to retrieval parameters provided by the host for initiating the sub-retrieval. For example, the retrieval parameters include parameters related to the query vector and a return address of the sub-result.

According to embodiments of the disclosure, the sub-retrieval may be performed based on an approximate nearest neighbor search(ANNS) and the stored subset of data may be a sub-graph including a subset of data vectors. For example, the sub-graph may be obtained by splitting a graph including all data vectors which is used for the ANNS.

According to embodiments of the disclosure, the retrieval parameters may further include a candidate capacity of the ANNS. For example, the candidate capacity may indicate the number of candidate data vectors in a candidate. For example, the computing unit 1420 may search in the sub-graph for data vectors the number of which is the candidate capacity and that are closest in distance to the query vector, according to parameters related to the query vector.

According to embodiments of the disclosure, the computing unit 1420 may select, in the sub-graph, a start data vector as a current vector, and initializing the candidate to include the start data vector; and traverse neighbor data vectors of the current vector in the sub-graph; compute distances between the neighbor data vectors and the query vector; update the candidate based on a comparison of the distances; select, as the current vector, a candidate data vector in the updated candidate that is closest in distance to the query vector, and return to the operation of traversing the neighbor data vectors of the current vector in the sub-graph in the case that the current vector is changed.

According to embodiments of the disclosure, the computing unit 1420 may select, among the neighbor data vectors and existing candidate data vectors, the candidate capacity of the data vectors that are closest in distance to the query vector as new candidate data vectors; update the candidate in case there is a new candidate data vector different from the existing candidate data vectors.

According to embodiments of the disclosure, the computing unit 1420 may return to the host the candidate data vectors in the candidate as the sub-result according to the return address of the sub-result.

With the host and PNM apparatus of the disclosure as described above, firstly, the sub-graph including the subset of data vectors is stored in the memory of the PNM apparatus and the sub-retrieval is accomplished in the PNM apparatus, which reduces data transmission between the CPU and the memory during the retrieval period; secondly, the sub-retrieval is offloaded to the PNM apparatus, and the host initiates the sub-retrieval in the PNM apparatus only through the interface and performs the merging of a small number of sub-results, which reduces the load of the CPU; furthermore, the retrieval is partitioned into a plurality of sub-retrievals performed in parallel in the PNM apparatuses, the reduction of graph density and the candidate capacity reduces the computation of the retrieval and improves the performance of the retrieval.

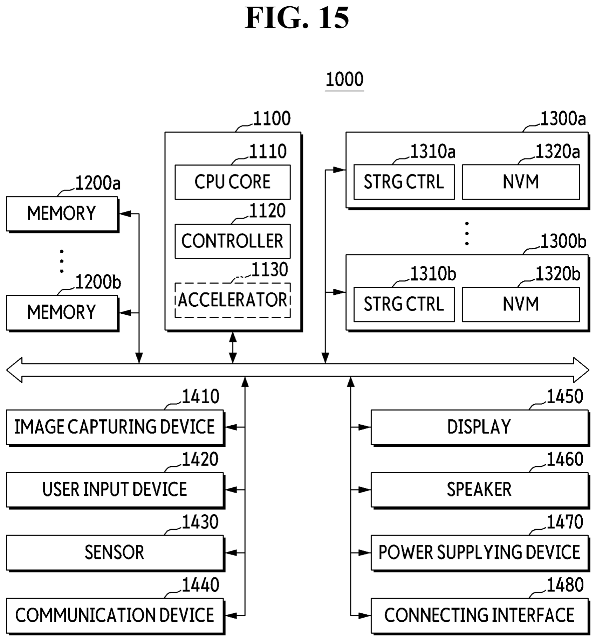

FIG. 15 is a diagram of a system 1000 to which a storage device is applied according to an embodiment.

The system 1000 of FIG. 15 may be, for example, a mobile system, such as a portable communication terminal (e.g., a mobile phone), a smartphone, a tablet personal computer (PC), a wearable device, a healthcare device, or an Internet of Things (IOT) device. However, the system 1000 of FIG. 15 is not limited thereto and may be, for example, a PC, a laptop computer, a server, a media player, or an automotive device (e.g., a navigation device).

Referring to FIG. 15, the system 1000 may include a main processor 1100, memories (e.g., 1200a and 1200b), and storage devices (e.g., 1300a and 1300b). In addition, the system 1000 may include at least one of an image capturing device 1410, a user input device 1420, a sensor 1430, a communication device 1440, a display 1450, a speaker 1460, a power supplying device 1470, and a connecting interface 1480.

The main processor 1100 may control all operations of the system 1000 including, for example, operations of other components included in the system 1000. The main processor 1100 may be implemented as, for example, a general-purpose processor, a dedicated processor, or an application processor.

The main processor 1100 may include at least one CPU core 1110 and a controller 1120 configured to control the memories 1200a and 1200b and/or the storage devices 1300a and 1300b. In some embodiments, the main processor 1100 may further include an accelerator 1130, which is a dedicated circuit for a high-speed data operation, such as, for example, an artificial intelligence (AI) data operation. The accelerator 1130 may include, for example, a graphics processing unit (GPU), a neural processing unit (NPU) and/or a data processing unit (DPU), and may be implemented as a chip that is physically separate from the other components of the main processor 1100.

The memories 1200a and 1200b may be used as main memory devices of the system 1000. Although each of the memories 1200a and 1200b may include a volatile memory, such as, for example, static random access memory (SRAM) and/or dynamic RAM (DRAM), each of the memories 1200a and 1200b may include non-volatile memory according to embodiments, such as, for example, a flash memory, phase-change RAM (PRAM) and/or resistive RAM (RRAM). The memories 1200a and 1200b may be implemented in the same package as the main processor 1100. The memory 1200b may also be a PNM apparatus. For example, the memory 1200a may be implemented in the same package as the main processor 1100, while the memory 1200b may be the PNM apparatus external to the main processor, and there may be more than one PNM apparatus (e.g., PNM apparatuses 1200b, 1200c ......).

The storage devices 1300a and 1300b may serve as non-volatile storage devices configured to store data regardless of whether power is supplied thereto, and may have a larger storage capacity than the memories 1200a and 1200b. The storage devices 1300a and 1300b may respectively include storage controllers (STRG CTRL) 1310a and 1310b and non-volatile memories (NVM) 1320a and 1320b configured to store data under the control of the storage controllers 1310a and 1310b. Although the NVMs 1320a and 1320b may include flash memories having a two-dimensional (2D) structure or a three-dimensional (3D) V-NAND structure, the NVMs 1320a and 1320b may include other types of NVMs, such as, for example, PRAM and/or RRAM.

The storage devices 1300a and 1300b may be physically separated from the main processor 1100 and included in the system 1000, or may be implemented in the same package as the main processor 1100. The storage devices 1300a and 1300b may be solid-state devices (SSDs) or memory cards, and be removably combined with other components of the system 100 through an interface, such as the connecting interface 1480 that is described further below. The storage devices 1300a and 1300b may be devices to which a standard protocol, such as, for example, a universal flash storage (UFS), an embedded multi-media card (eMMC), or a non-volatile memory express (NVMe), is applied. However, the storage devices 1300a and 1300b are not limited thereto.

The image capturing device 1410 may capture still images or moving images. The image capturing device 1410 may include, for example, a camera, a camcorder, and/or a webcam.

The user input device 1420 may receive various types of data input by a user of the system 1000 and may include, for example, a touch pad, a keypad, a keyboard, a mouse, and/or a microphone.

The sensor 1430 may detect various types of physical quantities, which may be obtained from the outside of the system 1000, and convert the detected physical quantities into electric signals. The sensor 1430 may include, for example, a temperature sensor, a pressure sensor, an illuminance sensor, a position sensor, an acceleration sensor, a biosensor, and/or a gyroscope sensor.

The communication device 1440 may transmit and receive signals between other devices outside the system 1000 according to various communication protocols. The communication device 1440 may include, for example, an antenna, a transceiver, and/or a modem.

The display 1450 and the speaker 1460 may serve as output devices configured to respectively output visual information and auditory information to the user of the system 1000.

The power supplying device 1470 may appropriately convert power supplied from a battery embedded in the system 1000 and/or an external power source, and supply the converted power to each of components of the system 1000.

The connecting interface 1480 may provide a connection between the system 1000 and an external device, which is connected to the system 1000, and is capable of transmitting and receiving data to and from the system 1000. The connecting interface 1480 may be implemented by using various interface schemes, such as, for example, advanced technology attachment (ATA), serial ATA (SATA), external SATA (e-SATA), small computer small interface (SCSI), serial attached SCSI (SAS), peripheral component interconnection (PCI), PCI express (PCIe), NVMe, IEEE 1394, a universal serial bus (USB) interface, a secure digital (SD) card interface, a multi-media card (MMC) interface, an eMMC interface, a UFS interface, an embedded UFS (eUFS) interface, and a compact flash (CF) card interface.

According to the embodiments of the disclosure, a system (e.g., 1000), to which a process near memory (PNM) apparatus is applied, is provided, the system includes a main processor (e.g., 1100); a memory (e.g., 1200a and 1200b); a plurality of PNM apparatuses (e.g., 1200b, 1200c......); and a storage device (e.g., 1300a and 1300b). For example, the PNM apparatus is configured to perform the retrieval method as described above.

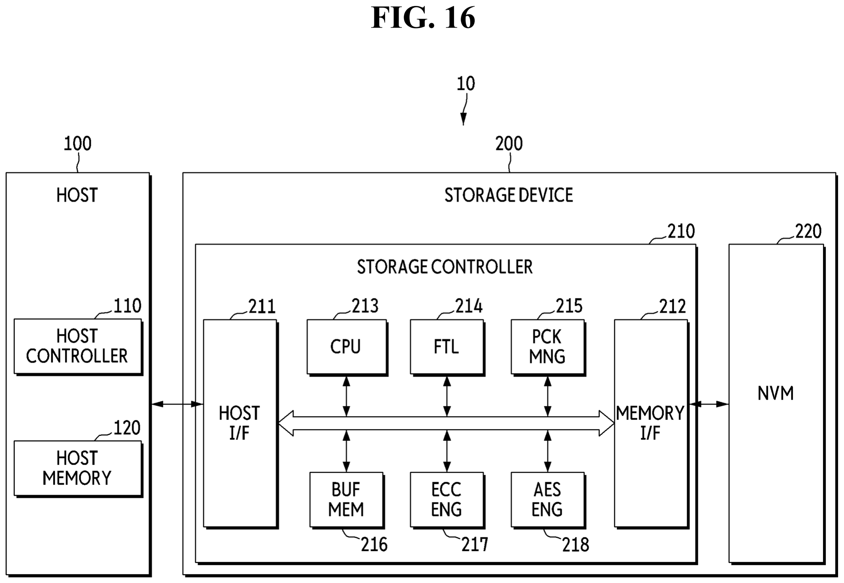

FIG. 16 is a block diagram of a host storage system 10 according to an embodiment.

The host storage system 10 may include a host 100 and a storage device 200. The storage device 200 may include a storage controller 210 and an NVM 220. According to an embodiment, the host 100 may include a host controller 110 and a host memory 120. The host memory 120 may serve as a buffer memory configured to temporarily store data to be transmitted to the storage device 200 or data received from the storage device 200.

The storage device 200 may include storage media configured to store data in response to requests from the host 100. As an example, the storage device 200 may include at least one of an SSD, an embedded memory, and a removable external memory. In an example case in which the storage device 200 is an SSD, the storage device 200 may be a device that conforms to an NVMe standard. In an example case in which the storage device 200 is an embedded memory or an external memory, the storage device 200 may be a device that conforms to a UFS standard or an eMMC standard. Each of the host 100 and the storage device 200 may generate a packet according to an adopted standard protocol and may transmit the packet.

In an example case in which the NVM 220 of the storage device 200 includes a flash memory, the flash memory may include a 2D NAND memory array or a 3D (or vertical) NAND (VNAND) memory array. As another example, the storage device 200 may include various other kinds of NVMs. For example, the storage device 200 may include magnetic RAM (MRAM), spin-transfer torque MRAM, conductive bridging RAM (CBRAM), ferroelectric RAM (FRAM), PRAM, RRAM, and various other kinds of memories.

According to an embodiment, the host controller 110 and the host memory 120 may be implemented as separate semiconductor chips. However, the disclosure is not limited thereto, and as such, according to another embodiment, the host controller 110 and the host memory 120 may be integrated in the same semiconductor chip. As an example, the host controller 110 may be any one of a plurality of devices included in an application processor (AP). The AP may be implemented as, for example, a system-on-chip (SoC). Further, the host memory 120 may be an embedded memory included in the AP or an NVM or memory device located outside the AP. The host may also include a host memory 120 implemented external to the host, e.g., the host memory 120 may be a plurality of near-memory processing (PNM) apparatuses external to the host (e.g., PNM apparatuses 120a, 120b ......).

The host controller 110 may manage an operation of storing data (e.g., write data) of a buffer region of the host memory 120 in the NVM 220 or an operation of storing data (e.g., read data) of the NVM 220 in the buffer region.

The storage controller 210 may include a host interface 211, a memory interface 212, a CPU 213, a flash translation layer (FTL) 214, a packet manager 215, a buffer memory 216, an error correction code (ECC) engine 217, and an advanced encryption standard (AES) engine 218. The storage controller 210 may further include a working memory in which the FTL 214 is loaded. The CPU 213 may execute the FTL 214 to control data write and read operations on the NVM 220.

The host interface 211 may transmit and receive packets to and from the host 100. A packet transmitted from the host 100 to the host interface 211 may include a command or data to be written to the NVM 220. A packet transmitted from the host interface 211 to the host 100 may include a response to the command or data read from the NVM 220. The memory interface 212 may transmit data to be written to the NVM 220 to the NVM 220 or receive data read from the NVM 220. The memory interface 212 may be configured to comply with a standard protocol, such as, for example, Toggle or open NAND flash interface (ONFI).

The FTL 214 may perform various functions, such as, for example, an address mapping operation, a wear-leveling operation, and a garbage collection operation. The address mapping operation may be an operation of converting a logical address received from the host 100 into a physical address used to actually store data in the NVM 220. The wear-leveling operation may be a technique for preventing or reducing excessive deterioration of a specific block by allowing blocks of the NVM 220 to be uniformly used. As an example, the wear-leveling operation may be implemented using a firmware technique that balances erase counts of physical blocks. The garbage collection operation may be a technique for ensuring usable capacity in the NVM 220 by erasing an existing block after copying valid data of the existing block to a new block.

The packet manager 215 may generate a packet according to a protocol of an interface, which consents to the host 100, or parse various types of information from the packet received from the host 100. In addition, the buffer memory 216 may temporarily store data to be written to the NVM 220 or data to be read from the NVM 220. Although the buffer memory 216 may be a component included in the storage controller 210, the disclosure is not limited thereto, and as such, according to some embodiments, the buffer memory 216 may be provided outside of the storage controller 210.

The ECC engine 217 may perform error detection and correction operations on read data read from the NVM 220. For example, the ECC engine 217 may generate parity bits for write data to be written to the NVM 220, and the generated parity bits may be stored in the NVM 220 together with write data. During the reading of data from the NVM 220, the ECC engine 217 may correct an error in the read data by using the parity bits read from the NVM 220 along with the read data, and output error-corrected read data.

The AES engine 218 may perform at least one of an encryption operation and a decryption operation on data input to the storage controllers 210 by using a symmetric-key algorithm.

According to the embodiments of the disclosure, a host storage system (e.g., 10) is provided, the host storage system includes a host (e.g., 100); and a plurality of process near memory (PNM) apparatuses. For example, the host may perform the retrieval method applied to the host as described above, and the PNM apparatus may perform the retrieval method applied to the PNM apparatus as described above.

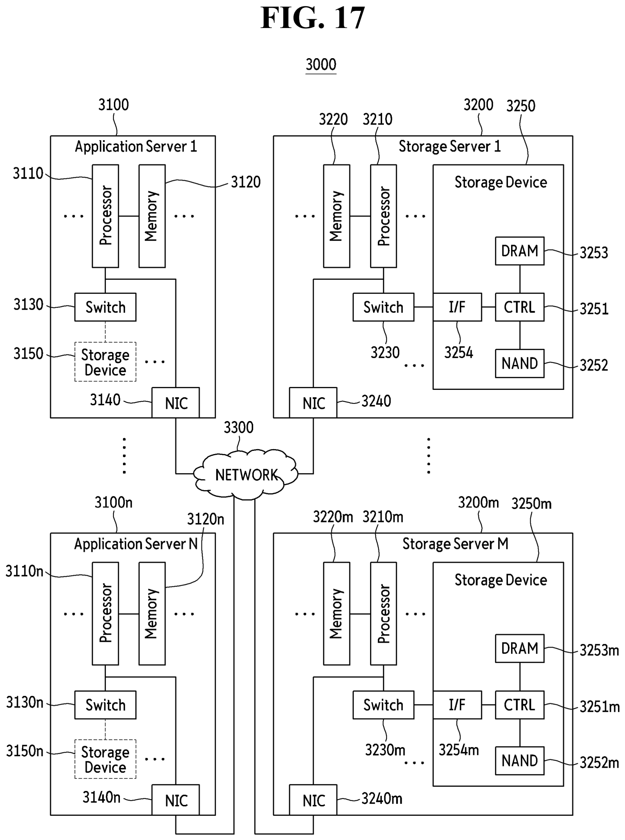

FIG. 17 is a diagram of a data center 3000 to which a memory device is applied, according to an embodiment.

### Platform portion - Server (Application/Storage)

Referring to FIG. 17, the data center 3000 may be a facility that collects various types of pieces of data and provides services, and may be referred to as a data storage center. The data center 3000 may be a system for operating a search engine and a database, and may be a computing system used by companies, such as banks or government agencies. The data center 3000 may include application servers 3100 to 3100n and storage servers 3200 to 3200m, in which n and m are positive integers. The number of application servers 3100 to 3100n and the number of storage servers 3200 to 3200m may be variously selected according to embodiments. The number of application servers 3100 to 3100n may be different from the number of storage servers 3200 to 3200m.

The application server 3100 or the storage server 3200 may include at least one of processors 3110 and 3210 and memories 3120 and 3220, at least one of switches 3130 to 3130n, at least one of network interface cards (NICs) 3140 to 3140n and 3240 to 3240m, at least one of DRAMs 3253 to 3253m, and at least one of controllers 3251 to 3251m. The memory 3120 may also include a plurality of near-memory processing (PNM) apparatuses (e.g., 3120a, 3120b ......). The storage server 3200 will now be described as an example. The processor 3210 may control all operations of the storage server 3200, access the memory 3220, and execute instructions and/or data loaded in the memory 3220. The memory 3220 may be, for example, a double-data-rate synchronous DRAM (DDR SDRAM), a high-bandwidth memory (HBM), a hybrid memory cube (HMC), a dual in-line memory module (DIMM), Optane DIMM, and/or a non-volatile DIMM (NVMDIMM). In some embodiments, the numbers of processors 3210 and memories 3220 included in the storage server 3200 may be variously selected. In an embodiment, the processor 3210 and the memory 3220 may provide a processor-memory pair. In an embodiment, the number of processors 3210 may be different from the number of memories 3220. The processor 3210 may include a single-core processor or a multi-core processor. The above description of the storage server 3200 may be similarly applied to the application server 3100. In some embodiments, the application server 3100 may not include a storage device 3150. The storage server 3200 may include at least one storage device 3250. The number of storage devices 3250 included in the storage server 3200 may be variously selected according to embodiments.

### Platform portion - Network

The application servers 3100 to 3100n may communicate with the storage servers 3200 to 3200m through a network 3300. The network 3300 may be implemented by using a fiber channel (FC) or Ethernet. In this case, the FC may be a medium used for relatively high-speed data transmission and may use an optical switch with high performance and high availability. The storage servers 3200 to 3200m may be provided as file storages, block storages, or object storages according to an access method of the network 3300.

In an embodiment, the network 3300 may be a storage-dedicated network, such as a storage area network (SAN). For example, the SAN may be an FC-SAN, which uses an FC network and is implemented according to an FC protocol (FCP). As another example, the SAN may be an Internet protocol (IP)-SAN, which uses a transmission control protocol (TCP)/IP network and is implemented according to a SCSI over TCP/IP or Internet SCSI (iSCSI) protocol. In an embodiment, the network 3300 may be a general network, such as a TCP/IP network. For example, the network 3300 may be implemented according to a protocol, such as FC over Ethernet (FCoE), network attached storage (NAS), and NVMe over Fabrics (NVMe-oF).

Hereinafter, the application server 3100 and the storage server 3200 will mainly be described. A description of the application server 3100 may be applied to another application server 3100n, and a description of the storage server 3200 may be applied to another storage server 3200m.

The application server 3100 may store data, which is requested by a user or a client to be stored, in one of the storage servers 3200 to 3200m through the network 3300. Also, the application server 3100 may obtain data, which is requested by the user or the client to be read, from one of the storage servers 3200 to 3200m through the network 3300. For example, the application server 3100 may be implemented as a web server or a database management system (DBMS).

The application server 3100 may access a memory 3120n or a storage device 3150n, which is included in another application server 3100n, through the network 3300. However, the disclosure is not limited thereto, and as such, according to an embodiment, the application server 3100 may access memories 3220 to 3220m or storage devices 3250 to 3250m, which are included in the storage servers 3200 to 3200m, through the network 3300. Thus, the application server 3100 may perform various operations on data stored in application servers 3100 to 3100n and/or the storage servers 3200 to 3200m. For example, the application server 3100 may execute an instruction for moving or copying data between the application servers 3100 to 3100n and/or the storage servers 3200 to 3200m. In this case, the data may be moved from the storage devices 3250 to 3250m of the storage servers 3200 to 3200m to the memories 3120 to 3120n of the application servers 3100 to 3100n directly or through the memories 3220 to 3220m of the storage servers 3200 to 3200m. The data moved through the network 3300 may be data encrypted for security or privacy.

### Organic relationship - Interface structure/type

The storage server 3200 will now be described as an example. An interface 3254 may provide physical connection between a processor 3210 and a controller 3251 and a physical connection between a network interface card (NIC) 3240 and the controller 3251. For example, the interface 3254 may be implemented using a direct attached storage (DAS) scheme in which the storage device 3250 is directly connected with a dedicated cable. For example, the interface 3254 may be implemented by using various interface schemes, such as ATA, SATA, e-SATA, an SCSI, SAS, PCI, PCIe, NVMe, IEEE 1394, a USB interface, an SD card interface, an MMC interface, an eMMC interface, a UFS interface, an eUFS interface, and/or a CF card interface.

The storage server 3200 may further include a switch 3230 and the NIC 3240. The switch 3230 may selectively connect the processor 3210 to the storage device 3250 or selectively connect the NIC 3240 to the storage device 3250 under the control of the processor 3210.

In an embodiment, the NIC 3240 may include a network interface card and a network adaptor. The NIC 3240 may be connected to the network 3300 by, for example, a wired interface, a wireless interface, a BLUETOOTH interface, or an optical interface. The NIC 3240 may include an internal memory, a digital signal processor (DSP), and a host bus interface and may be connected to the processor 3210 and/or the switch 3230 through the host bus interface. The host bus interface may be implemented as one of the above-described examples of the interface 3254. In an embodiment, the NIC 3240 may be integrated with at least one of the processor 3210, the switch 3230, and the storage device 3250.

### Organic Relationship - Interface operation

In the storage servers 3200 to 3200m or the application servers 3100 to 3100n, a processor may transmit a command to storage devices 3150 to 3150n and 3250 to 3250m or the memories 3120 to 3120n and 3220 to 3220m and program or read data. In this case, the data may be data of which an error is corrected by an ECC engine. The data may be data on which a data bus inversion (DBI) operation or a data masking (DM) operation is performed, and may include cyclic redundancy code (CRC) information. The data may be data encrypted for security or privacy.

Storage devices 3150 to 3150n and 3250 to 3250m may transmit a control signal and a command/address signal to NAND flash memory devices 3252 to 3252m in response to a read command received from the processor. Thus, in an example case in which data is read from the NAND flash memory devices 3252 to 3252m, a read enable (RE) signal may be input as a data output control signal, and thus, the data may be output to a DQ bus. A data strobe signal DQS may be generated using the RE signal. The command and the address signal may be latched in a page buffer depending on a rising edge or falling edge of a write enable (WE) signal.

### Product portion - SSD basic operation

The controller 3251 may control all operations of the storage device 3250. In an embodiment, the controller 3251 may include SRAM. The controller 3251 may write data to the NAND flash memory device 3252 in response to a write command or read data from the NAND flash memory device 3252 in response to a read command. For example, the write command and/or the read command may be provided from the processor 3210 of the storage server 3200, the processor 3210m of another storage server 3200m, or the processors 3110 and 3110n of the application servers 3100 and 3100n. DRAM 3253 may temporarily store (or buffer) data to be written to the NAND flash memory device 3252 or data read from the NAND flash memory device 3252. Also, the DRAM 3253 may store metadata. Here, the metadata may be user data or data generated by the controller 3251 to manage the NAND flash memory device 3252. The storage device 3250 may include a secure element (SE) for security or privacy.

According to example embodiments of the disclosure, a data center system (e.g., 3000) is provided, the data center system includes a plurality of application servers (3100 to 3100n); and a plurality of storage servers (e.g., 3200 to 3200m). For example, each application server includes a plurality of process near memory (PNM) apparatuses. For example, the PNM apparatus is configured to perform the retrieval method as described above.

As is traditional in the field of the disclosure, embodiments are described, and illustrated in the drawings, in terms of functional blocks, units and/or modules. Those skilled in the art will appreciate that these blocks, units and/or modules are physically implemented by electronic (or optical) circuits such as logic circuits, discrete components, microprocessors, hard-wired circuits, memory elements, wiring connections, etc., which may be formed using semiconductor-based fabrication techniques or other manufacturing technologies. In the case of the blocks, units and/or modules being implemented by microprocessors or similar, they may be programmed using software (e.g., microcode) to perform various functions discussed herein and may optionally be driven by firmware and/or software. However, the disclosure is not limited thereto, and as such, according to an embodiment, each block, unit and/or module may be implemented by dedicated hardware, or as a combination of dedicated hardware to perform some functions and a processor (e.g., one or more programmed microprocessors and associated circuitry) to perform other functions.

According to embodiments of the disclosure, there is provided a computer-readable storage medium storing a computer program. For example, the computer program when executed by a processor, implements the retrieval method as described above.

According to embodiments of the disclosure, there is provided an electronic apparatus including a processor, and a memory storing a computer program. For example, the computer program when executed by a processor, implements the retrieval method as described above.

According to embodiments of the disclosure, a computer-readable storage medium may also be provided, in which a computer program is stored thereon. The program, when executed, may implement the retrieval method as described above. Examples of computer-readable storage media include read-only memory (ROM), random access programmable read-only memory (PROM), electrically erasable programmable read-only memory (EEPROM), random access memory (RAM), dynamic random access memory (DRAM), static random access memory (SRAM), flash memory, non-volatile memory, CD-ROM, CD-R, CD+R, CD-RW, CD+RW, DVD-ROM, DVD-R, DVD+R, DVD-RW, DVD+RW, DVD-RAM, BD-ROM, BD-R, BD-R LTH, BD-RE, BLU-RAY or optical disk memory, hard disk drive (HDD), solid state drive (SSD), card-based memory (such as, e.g., multimedia cards, Secure Digital (SD) cards and/or Extreme Digital (XD) cards), magnetic tapes, floppy disks, magneto-optical data storage devices, optical data storage devices, hard disks, solid state disks, and/or any other device, where the other device is configured to store the computer programs and any associated data, data files, and/or data structures in a non-transitory manner and to provide the computer programs and any associated data, data files, and/or data structures to a processor or computer, so that the processor or computer may execute the computer program. The computer program in the computer readable storage medium may run in an environment deployed in a computer device such as, for example, a terminal, client, host, agent, server, etc.. In one example, the computer program and any associated data, data files and/or data structures are distributed on a networked computer system such that the computer program and any associated data, data files and/or data structures are stored, accessed, and/or executed in a distributed manner by one or more processors or computers.

The retrieval method, the host and the PNM apparatus according to example embodiments of the disclosure, firstly, the sub-graph including the subset of data vectors is stored in the memory of the PNM apparatus and the sub-retrieval is accomplished in the PNM apparatus, which reduces data transmission between the CPU and the memory during the retrieval period; secondly, the sub-retrieval is offloaded to the PNM apparatus, and the host initiates the sub-retrieval in the PNM apparatus only through the interface and performs the merging of a small number of sub-results, which reduces the load of the CPU; furthermore, the retrieval is partitioned into multiple sub-retrievals performed in parallel in the PNM apparatuses, the reduction of graph density and the candidate capacity reduces the computation of the retrieval and improves the performance of the retrieval.

Embodiments are set out in the following clauses:
Clause 1: A retrieval method, applied to a host, the method comprising:
   receiving a query vector;
   controlling initialization of a plurality of process near memory (PNM) apparatuses to perform, in a respective stored subset of data, a sub-retrieval regarding the query vector;
   receiving a plurality of sub-results returned by the plurality of PNM apparatuses based on the sub-retrieval; and
   outputting a retrieval result regarding the query vector based on the plurality of sub-results.
Clause 2: The method of clause 1, wherein the controlling of the initialization of the plurality of PNM apparatuses to perform, in the respective stored subset of data, the sub-retrieval regarding the query vector comprises:
   providing retrieval parameters to the plurality of PNM apparatuses to initiate the plurality of PNM apparatuses to perform the sub-retrieval in parallel in the respective stored subset of data, wherein the retrieval parameters comprise: parameters related to the query vector and a return address of a sub-result.
Clause 3: The method of clause 1 or 2, wherein the plurality of PNM apparatuses are all or some of PNM apparatuses in a PNM apparatus pool.
Clause 4: The method of any preceding clause, wherein the outputting of the retrieval result regarding the query vector based on the plurality of sub-results comprises:
   merging the plurality of sub-results to output the retrieval result.
Clause 5: The method of any preceding clause, wherein the sub-retrieval is performed based on an approximate nearest neighbor search (ANNS) and wherein the stored subset of data is a sub-graph comprising a subset of data vectors, wherein the sub-graph is obtained by splitting a graph comprising all data vectors which is used for the ANNS.
Clause 6: The method of any preceding clause, wherein the retrieval parameters further comprise a candidate capacity of the ANNS, wherein the candidate capacity indicates the number of candidate data vectors in a candidate and the candidate capacity is less than a predetermined number of results,
   wherein the outputting of the retrieval result regarding the query vector based on the plurality of sub-results comprises:
   sorting the plurality of sub-results based on distances between the plurality of sub-results and the query vector, and
   outputting the sorted sub-results the number of which is the predetermined number of results, as the retrieval result.
Clause 7: A retrieval method, applied to a process near memory (PNM) apparatus, the method comprising:
   performing, in a stored subset of data, a sub-retrieval regarding a query vector; and
   returning to a host a sub-result based on the sub-retrieval after completion of the sub-retrieval.
Clause 8: The method of clause 7, wherein the performing, in the stored subset of data, the sub-retrieval regarding the query vector comprises:
   performing the sub-retrieval in the stored subset of data according to retrieval parameters provided by the host for initiating the sub-retrieval, wherein the retrieval parameters comprise: parameters related to the query vector and a return address of the sub-result.
Clause 9: The method of clause 7 or 8, wherein the sub-retrieval is performed based on an approximate nearest neighbor search (ANNS) and the stored subset of data is a sub-graph comprising a subset of data vectors, wherein the sub-graph is obtained by splitting a graph comprising all data vectors which is used for the ANNS.
Clause 10: The method of clause 9, wherein the retrieval parameters further comprise a candidate capacity of the ANNS, wherein the candidate capacity indicates the number of candidate data vectors in a candidate,
   wherein performing the sub-retrieval in the stored subset of data according to the retrieval parameters comprises:searching in the sub-graph for data vectors the number of which is the candidate capacity and that are closest in distance to the query vector, according to parameters related to the query vector.
Clause 11: The method of clause 10, wherein the searching in the sub-graph for the data vectors the number of which is the candidate capacity and that are closest in distance to the query vector comprises:
   selecting, in the sub-graph, a start data vector as a current vector, and initializing the candidate to comprise the start data vector;
   traversing neighbor data vectors of the current vector in the sub-graph;
   computing distances between the neighbor data vectors and the query vector;
   updating the candidate based on a comparison of the distances;
   selecting, as the current vector, a candidate data vector in the updated candidate that is closest in distance to the query vector, and
   returning to the operation of traversing the neighbor data vectors of the current vector in the sub-graph in the case that the current vector is changed.
Clause 12: The method of clause 11, wherein the updating of the candidate based on the comparison of distances comprises:
   selecting, among the neighbor data vectors and existing candidate data vectors, the candidate capacity of the data vectors that are closest in distance to the query vector as new candidate data vectors;
   updating the candidate in case there is a new candidate data vector different from the existing candidate data vectors.
Clause 13: The method of any one of clauses 10 to 12, wherein the returning to the host the sub-result based on the sub-retrieval comprises:
   returning to the host the candidate data vectors in the candidate as the sub-result according to the return address of the sub-result.
Clause 14: A host, comprising:
   a memory storing instructions; and
   a processor, wherein the instructions, when executed by the processor, cause the processor to:
      receive a query vector;
      control initialization of a plurality of process near memory (PNM) apparatuses to perform, in a respective stored subset of data, a sub-retrieval regarding the query vector;
      receive a plurality of sub-results returned by the plurality of PNM apparatuses based on the sub-retrieval; and
      output a retrieval result regarding the query vector based on the plurality of sub-results.
Clause 15: The host of clause 14, wherein the instructions, when executed by the processor, cause the processor to:
   provide retrieval parameters to the plurality of PNM apparatuses to initiate the plurality of PNM apparatuses to perform the sub-retrieval in parallel in the respective stored subset of data, wherein the retrieval parameters comprise: parameters related to the query vector and a return address of a sub-result.
Clause 16: The host of clause 14 or 15, wherein the plurality of PNM apparatuses are all or some of PNM apparatuses in a PNM apparatus pool.
Clause 17: The host of any one of clauses 14 to 16, wherein the instructions, when executed by the processor, cause the processor to:
   merge the plurality of sub-results to output the retrieval result.
Clause 18: The host of any one of clauses 14 to 17, wherein the sub-retrieval is performed based on an approximate nearest neighbor search (ANNS) and wherein the stored subset of data is a sub-graph comprising a subset of data vectors, wherein the sub-graph is obtained by splitting a graph comprising all data vectors which is used for the ANNS.
Clause 19: The host of clause 18, wherein the retrieval parameters further comprise a candidate capacity of the ANNS, wherein the candidate capacity indicates the number of candidate data vectors in a candidate and the candidate capacity is less than a predetermined number of results,
   wherein the instructions, when executed by the processor, cause the processor to:
   sort the plurality of sub-results based on distances between the plurality of sub-results and the query vector, and
   output the sorted sub-results the number of which is the predetermined number of results, as the retrieval result.
Clause 20: A process near memory (PNM) apparatus comprising:
   a memory storing a subset of data; and
   a computing unit configured to:
      perform, in a stored subset of data, a sub-retrieval regarding a query vector; and
      return to a host a sub-result based on the sub-retrieval after completion of the sub-retrieval.
Clause 21: The PNM apparatus of clause 20, wherein the computing unit is configured to:
   perform the sub-retrieval in the stored subset of data according to retrieval parameters provided by the host for initiating the sub-retrieval, wherein the retrieval parameters comprise: parameters related to the query vector and a return address of the sub-result.
Clause 22: The PNM apparatus of clause 20 or 21, wherein the sub-retrieval is performed based on an approximate nearest neighbor search (ANNS) and the stored subset of data is a sub-graph comprising a subset of data vectors, wherein the sub-graph is obtained by splitting a graph comprising all data vectors which is used for the ANNS.
Clause 23: The PNM apparatus of clause 22, wherein the retrieval parameters further comprise a candidate capacity of the ANNS, wherein the candidate capacity indicates the number of candidate data vectors in a candidate,
   wherein the computing unit is configured to:search in the sub-graph for data vectors the number of which is the candidate capacity and that are closest in distance to the query vector, according to parameters related to the query vector.
Clause 24: The PNM apparatus of clause 23, wherein the computing unit is configured to:
   select, in the sub-graph, a start data vector as a current vector, and initializing the candidate to comprise the start data vector;
   traverse neighbor data vectors of the current vector in the sub-graph;
   compute distances between the neighbor data vectors and the query vector;
   update the candidate based on a comparison of the distances;
   select, as the current vector, a candidate data vector in the updated candidate that is closest in distance to the query vector, and
   return to the operation of traversing the neighbor data vectors of the current vector in the sub-graph in the case that the current vector is changed.
Clause 25: The PNM apparatus of clause 24, wherein the computing unit is configured to:
   select, among the neighbor data vectors and existing candidate data vectors, the candidate capacity of the data vectors that are closest in distance to the query vector as new candidate data vectors;
   update the candidate in case there is a new candidate data vector different from the existing candidate data vectors.
Clause 26: The PNM apparatus of any one of clauses 23 to 25, wherein the computing unit is configured to:
   return to the host the candidate data vectors in the candidate as the sub-result according to the return address of the sub-result.
Clause 27: A system to which a process near memory (PNM) apparatus is applied, comprising:
   a main processor;
   a memory;
   a plurality of PNM apparatuses; and
   a storage device;
   wherein the PNM apparatus is configured to perform the retrieval method according to any one of clauses 7-13.
Clause 28: A host storage system comprising:
   a host; and
   a plurality of process near memory (PNM) apparatuses,
   wherein the host is configured to receive a query vector; control initialization of a plurality of PNM apparatuses to perform, in a respective stored subset of data, a sub-retrieval regarding the query vector; receive a plurality of sub-results returned by the plurality of PNM apparatuses based on the sub-retrieval; and output a retrieval result regarding the query vector based on the plurality of sub-results; and
   the PNM apparatus is configured to perform, in a stored subset of data, a sub-retrieval regarding a query vector; and return to a host a sub-result based on the sub-retrieval after completion of the sub-retrieval.
Clause 29: A data center system comprising:
   a plurality of application servers; and
   a plurality of storage servers,
   wherein each application server comprises a plurality of process near memory (PNM) apparatuses, wherein the PNM apparatus is configured to perform the retrieval method according to any one of clauses 7-13.
Clause 30: A computer readable storage medium having a computer program stored thereon, wherein the retrieval method according to any one of clauses 1-13 is implemented when the computer program is executed by a processor.

While the present invention has been particularly shown and described with reference to embodiments thereof, it will be understood by those of ordinary skill in the art that various changes in form and detail may be made therein without departing from the scope of the invention as defined by the following claims.

## Claims

1. A retrieval method performed by a host device (1300, 100), the method comprising:
receiving (S610) a query vector;
initializing (S620) a plurality of process near memory, PNM, apparatuses (1400) to perform a sub-retrieval corresponding to the query vector;
receiving (S630) a plurality of sub-results, each of the plurality of sub-results provided by one of the plurality of PNM apparatuses (1400) based on the sub-retrieval performed in a subset of data stored in a respective PNM apparatus (1400); and
outputting (S640) a retrieval result corresponding to the query vector based on the plurality of sub-results.

2. The method of claim 1, wherein the initializing the plurality of PNM apparatuses (1400) comprises:
providing retrieval parameters to the plurality of PNM apparatuses (1400) to initiate the plurality of PNM apparatuses (1400) to perform, in parallel, the sub-retrieval in the subset of data stored in the respective PNM apparatus (1400), wherein the retrieval parameters comprise: parameters related to the query vector and a return address of a sub-result.

3. The method of claim 1 or 2, wherein the plurality of PNM apparatuses (1400) comprise all or some of PNM apparatuses (1400) in a PNM apparatus pool.

4. The method of any preceding claim, wherein the outputting of the retrieval result comprises:
merging the plurality of sub-results to output the retrieval result.

5. The method of claim 2, wherein the sub-retrieval is performed based on an approximate nearest neighbor search, ANNS, method,
wherein the subset of data stored in the respective PNM apparatus (1400) is a sub-graph comprising a subset of data vectors,
wherein the sub-graph is obtained by splitting a graph comprising all data vectors used for the ANNS method.

6. The method of claim 5, wherein the retrieval parameters further comprise a candidate capacity of the ANNS method,
wherein the candidate capacity indicates a number of candidate data vectors in a candidate list and the candidate capacity is less than a reference number of results, and
wherein the outputting of the retrieval result comprises:
sorting the plurality of sub-results based on distances between the plurality of sub-results and the query vector, and
outputting the reference number of the sorted sub-results as the retrieval result.

7. A retrieval method performed by a process near memory, PNM, apparatus (1400), the method comprising:
receiving (S1010) a request to perform a sub-retrieval corresponding to a query vector;
performing the sub-retrieval in a subset of data stored in the PNM apparatus (1400); and
sending (S1020), to a host device (1300, 100), a sub-result based on the sub-retrieval.

8. The method of claim 7, wherein the performing the sub-retrieval comprises:
performing the sub-retrieval in the subset of data according to retrieval parameters provided by the host device (1300, 100) for initiating the sub-retrieval,
wherein the retrieval parameters comprise: parameters related to the query vector and a return address of the sub-result.

9. The method of claim 8, wherein the sub-retrieval is performed based on an approximate nearest neighbor search, ANNS, method and the subset of data is a sub-graph comprising a subset of data vectors, and
wherein the sub-graph is obtained by splitting a graph comprising all data vectors for the ANNS method.

10. The method of claim 9, wherein the retrieval parameters further comprise a candidate capacity of the ANNS method,
wherein the candidate capacity indicates a number of candidate data vectors in a candidate list, and
wherein performing the sub-retrieval comprises searching in the sub-graph for a reference number of data vectors that are closest in distance to the query vector based on the retrieval parameters, wherein the reference number of data vectors satisfies the candidate capacity.

11. The method of claim 10, wherein the searching for the data vectors comprises:
selecting (S1110), in the sub-graph, a start data vector as a current vector, and initializing the candidate list to comprise the start data vector;
traversing (S1130) neighbor data vectors of the current vector in the sub-graph;
computing (S1140) distances between the neighbor data vectors and the query vector;
updating (S1150) the candidate list based on a comparison of the distances;
selecting (S1160), as the current vector, a candidate data vector in the updated candidate list that is closest in distance to the query vector, and
based on a change in the current vector, repeating the operation of traversing (S1130) the neighbor data vectors of the current vector in the sub-graph.

12. The method of claim 11, wherein the updating (S1150) of the candidate list based on the comparison of distances comprises:
selecting, among the neighbor data vectors and existing candidate data vectors, the reference number of the data vectors that are closest in distance to the query vector as new candidate data vectors; and
updating the candidate list based on the new candidate data vectors including a new candidate data vector different from the existing candidate data vectors.

13. The method of any one of claims 10 to 12, wherein the sending (S1020), to the host device (1300, 100), the sub-result based on the sub-retrieval comprises:
sending, to the host device (1300, 100), the candidate data vectors in the candidate list as the sub-result according to the return address of the sub-result.

14. A host device (1300, 100) comprising:
a memory (1310, 120) storing one or more instructions; and
a processor (1320, 110) configured to execute the one or more instructions to:
receive (S610) a query vector;
initialize (S620) a plurality of process near memory, PNM, apparatuses to perform a sub-retrieval corresponding to the query vector;
receive (S630) a plurality of sub-results, each of the plurality of sub-results provided by one of the plurality of PNM apparatuses (1400) based on the sub-retrieval performed in a subset of data stored in a respective PNM apparatus (1400); and
output (S640) a retrieval result corresponding to the query vector based on the plurality of sub-results.

15. The host device (1300, 100) of claim 14, wherein the processor (1320, 110) is further configured to:
provide retrieval parameters to the plurality of PNM apparatuses (1400) to initiate the plurality of PNM apparatuses (1400) to perform, in parallel, the sub-retrieval in the subset of data stored in the respective PNM apparatus (1400), wherein the retrieval parameters comprise: parameters related to the query vector and a return address of a sub-result.
